# FASCICULE DE BREVET EUROPEEN

(11) **EP 0 771 089 B1**
(45) Date de publication et mention de la délivrance du brevet: **12.06.2002**
(21) Numéro de dépôt: 96402236.2
(22) Date de dépôt: 21.10.1996
(51) Int. Cl.: H04B 10/155, H04L 27/04

(54) **Dispositif de modulation d'amplitude à modulateur à electro-absorption**
Einrichtung zur Amplitudenmodulation mit Elektroabsorptionsmodulator
Amplitude modulation device with an electro-absorption modulator

(30) Priorité: 23.10.1995 FR 9512436
(43) Date de publication de la demande: 02.05.1997
(73) Titulaire: ALCATEL, 75008 Paris (FR)
(72) Inventeur: Grandpierre, Georges, 91630 Guibeville (FR); Brandon, Eric, 92340 Bourg la Reine (FR)
(74) Mandataire: Lamoureux, Bernard

(56) Documents cités:
- EP-A- 0 444 688
- EP-A- 0 547 394
- EP-A- 0 594 088
- DE-A- 4 227 097
- US-A- 5 208 817

## Description

La présente invention concerne de manière générale un modulateur pour moduler en amplitude un signal optique par un signal électrique à transmettre. Plus précisément, l'invention concerne un tel dispositif fonctionnant en modulation d'amplitude à N états, N ≥ 2, dite modulation ASK en littérature anglo-saxonne pour Amplitude Shift Keying Modulation.

EP 547394 divulgue un modulateur optique utilisant un réglage de la tension continue par une boucle de rétroaction.

Un tel dispositif utilise typiquement un modulateur à électro-absorption recevant, sur une première entrée, un signal optique produit par une source laser, et, sur une seconde entrée, un signal électrique de modulation à N états. Il produit en sortie un signal optique modulé en amplitude. Lorsque le signal électrique de modulation est un signal binaire, l'amplitude A(t) du signal optique modulé SM(t), noté SM(t)=A(t).cos(ω.t), ω étant la pulsation du signal optique, en sortie du modulateur à électro-absorption prend l'un de deux états A(t) = 0 et A(t) = Amax respectivement selon que le signal électrique binaire est à l'état "0", dit premier état, et que le signal électrique binaire est à l'état "1", dit second état.

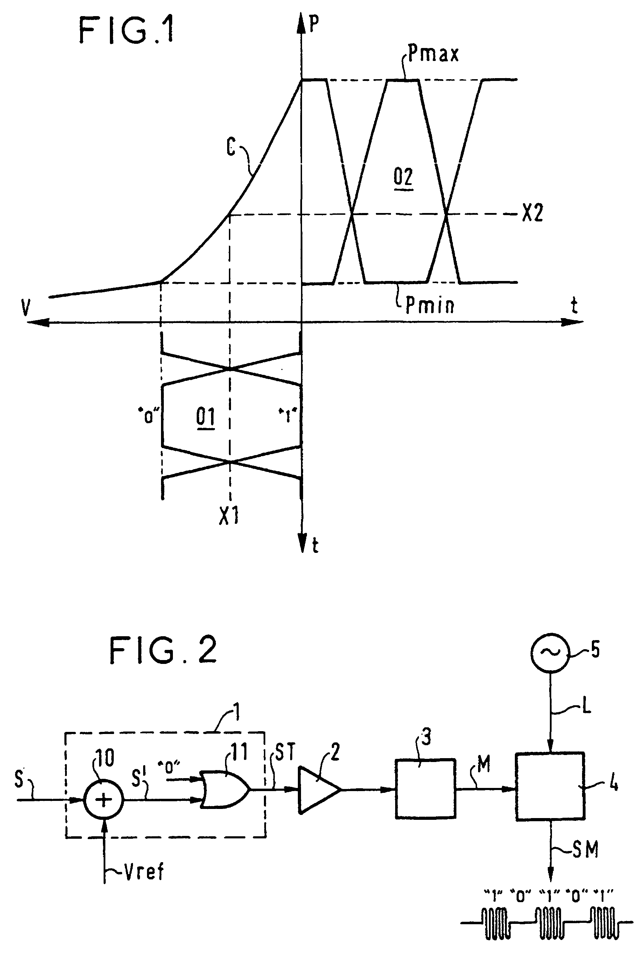

Dans la figure 1, un premier quartier du diagramme cartésien représente la tension V d'un signal électrique binaire de modulation en fonction du temps t, un second quartier donne la courbe C de puissance P du signal optique modulé en sortie du modulateur à électro-absorption en fonction de la tension V du signal électrique de modulation, et un troisième quartier illustre la puissance P du signal optique modulé en sortie du modulateur en fonction du temps t, lorsque le signal électrique binaire de modulation illustré dans le premier quartier est appliqué à son entrée de modulation. Les éléments binaires, ou bits, du signal électrique binaire de modulation ont une forme sensiblement trapézoïdale, les fronts montant et descendant de chacun de ces éléments étant inclinés. La représentation, sous forme d'un diagramme de l'oeil O2, de l'enveloppe du signal optique modulé issu du modulateur se construit par double projection, relativement à la courbe C, de la représentation, également sous forme d'un diagramme de l'oeil 01, du signal électrique de modulation.

Il apparaît, dans l'étude de ce diagramme, que pour des éléments binaires du signal électrique de modulation formant un diagramme de l'oeil symétrique par rapport à un niveau de tension moyen X1, le diagramme de l'oeil O2 de l'enveloppe du signal optique modulé est dissymétrique, les "fronts" montants et descendants de l'enveloppe ne s'entrecoupant pas à un niveau médian des niveaux maximal Pmax et minimal Pmin de puissance. Cette dissymétrie limite, pour un taux d'erreur donné en réception, la distance maximale pouvant être parcourue par le signal optique modulé. L'invention vise donc à remédier à l'inconvénient précité en fournissant un dispositif particulièrement avantageux de modulation en amplitude d'un signal optique par un signal électrique binaire.

A cette fin, un dispositif pour moduler en amplitude un signal optique par un signal électrique à N états, N étant supérieur ou égal à 2, comprenant :
- un modulateur pour recevoir ledit signal optique à moduler sur une première entrée, et un signal électrique modulant sur une seconde entrée,
est caractérisé, selon l'invention, en ce qu'il comprend, en amont de la seconde entrée, des moyens de mise en forme dont une entrée reçoit ledit signal électrique à N états, et dont une sortie bascule de l'un desdits N états vers un autre de ces N états en réponse à un niveau dudit signal électrique à N états supérieur à un seuil prédéterminé, et bascule dudit autre état vers ledit un des N états en réponse à un niveau dudit .signal électrique à N états inférieur audit seuil prédéterminé, ledit seuil prédéterminé étant associé au couple desdits un et autre états et ayant un niveau compris entre et différent des niveaux respectifs pris par ces deux états.

Selon une réalisation, le signal électrique à N états est un signal électrique binaire à 2 états, dits premier et second états, et la sortie desdits moyens de mise en forme bascule du premier état vers le second état en réponse à un niveau du signal électrique binaire supérieur à un seuil prédéterminé, et bascule du second état vers le premier état en réponse à un niveau du signal électrique binaire inférieur au seuil prédéterminé.

Pour cette réalisation, les moyens de mise en forme peuvent être sous la forme d'une porte OU à deux entrées dont l'une des entrées reçoit le signal électrique binaire et dont l'autre des entrées est mise audit premier état, le seuil prédéterminé correspondant à une tension de référence de ladite porte OU.

Ces moyens de mise en forme peuvent aussi être sous la forme d'un comparateur recevant le signal électrique binaire sur une entrée non-inverseuse et recevant la tension de référence sur une entrée inverseuse.

Typiquement, le signal optique est produit par une source laser.

En outre, la sortie des moyens de mise en forme peut être appliquée à la seconde entrée du modulateur, du type modulateur à électro-absorption, à travers un amplificateur et un té de polarisation disposé en série.

D'autres caractéristiques et avantages de la présente invention apparaîtront plus clairement à la lecture de la description suivante, en référence aux dessins annexés correspondants, dans lesquels :
- la figure 1, déjà commentée, est un diagramme cartésien pour illustrer le caractère non-linéaire de la fonction de transfert d'un modulateur à électro-absorption;
- la figure 2 montre, selon une première variante de l'invention, un dispositif pour moduler en amplitude un signal optique par un signal électrique binaire;
- la figure 3 montre, selon une seconde variante de l'invention, un dispositif pour moduler en amplitude un signal optique par un signal électrique binaire; et
- les figures 4A, 4B et 4C sont des diagrammes temporels respectifs d'un signal électrique binaire entrant, de ce signal électrique binaire transformé selon l'invention en un signal électrique binaire de modulation et de l'enveloppe du signal optique modulé obtenu, selon la présente invention, en sortie du modulateur à électro-absorption.

La description qui suit se limite a considérer la modulation d'un signal optique par un signal électrique binaire qui est un signal électrique à N = 2 états. Néanmoins l'homme du métier conviendra que l'invention peut être étendue à une modulation par un signal électrique définissant un nombre N quelconque d'états, N étant supérieur ou égal à 2.

En référence à la figure 2, un dispositif selon l'invention pour moduler en amplitude un signal optique par un signal électrique binaire comprend un circuit de mise en forme 1 constituant l'invention, un modulateur à électro-absorption 4, ou un MACH-ZEHNDER, une source laser 5 et, de préférence, un amplificateur 2 et un té de polarisation 3. Une première entrée du modulateur à électro-absorption 4 reçoit un signal optique L fourni par la source laser 5. Une seconde entrée du modulateur 4 reçoit un signal modulant M. Un signal électrique binaire entrant S est appliquée à cette seconde entrée à travers le circuit de mise en forme 1, et, éventuellement, l'amplificateur 2 et le té de polarisation 3 disposés en série avec le circuit de mise en forme. Le té 3 permet une polarisation du modulateur 4 dans une zone de fonctionnement appropriée. Le circuit de mise en forme 1, qui est donc disposé en amont de la seconde entrée, comprend en cascade un additionneur 10 et une porte OU à deux entrées 11 dont la sortie est reliée à l'entrée de l'amplificateur 2. Le signal électrique binaire entrant S est appliquée à une première entrée de l'additionneur 10 dont une seconde entrée reçoit une tension de référence Vref. Une sortie de cet additionneur 10 est connectée à une première entrée de la porte OU 11. Une seconde entrée de cette porte 11 reçoit l'état "O".

En sortie de l'additionneur 10, est produit un signal S' défini par S' = S + Vref. Si l'on note Vmax la tension correspondant à l'état "1" du signal binaire S, la sortie de la porte OU 11 bascule:
- de l'état "0" vers l'état "1" si S' ≥ Vmax/2, soit S + Vref ≥ Vmax/2, soit encore S ≥ Vref' en notant Vref' = Vmax/2 - Vref;
- de l'état "1" vers l'état "0" si S' ≤ Vmax/2, soit S + Vref ≤ Vmax/2, soit encore S ≤ Vref'.

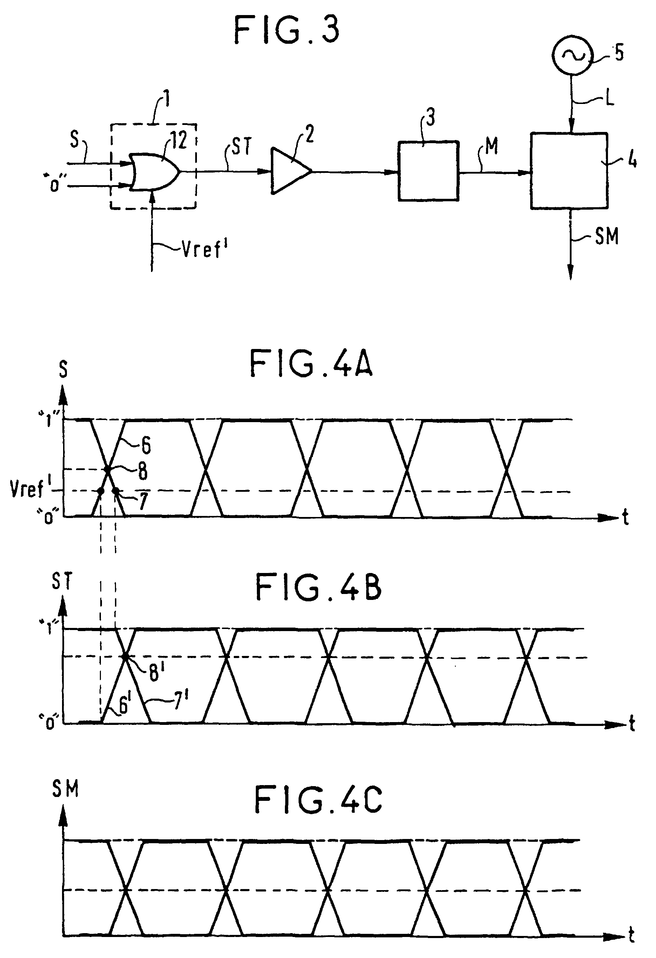

Il est maintenant fait référence aux figures 4A et 4B pour expliquer la fonction du circuit de mise en forme 1. Dans ces figures, les éléments binaires aux états "1" et "0" sont superposés.

La sortie ST du circuit de mise en forme 1 bascule de l'état "0" vers l'état "1" lorsque le niveau du front montant 6 du signal binaire entrant S est supérieur à Vref. Parallèlement, la sortie ST du circuit de mise en forme 1 bascule de l'état "1" vers l'état "0" lorsque le niveau du front descendant 7 du signal binaire entrant S est inférieur à Vref. Les fronts montants 6' et descendants 7' du signal ST ont alors la propriété de posséder, dans un diagramme du type diagramme de l'oeil, un point d'intersection à un niveau non médian 8' alors que le signal binaire entrant S possède un point d'intersection 8 entre fronts montants 6 et descendants 7 qui est médian par rapport aux niveaux respectifs correspondant aux états "0" et "1".

Ainsi, le signal électrique binaire ST destiné à moduler le signal optique L, après éventuelles amplification 2 et translation 3, possède un diagramme de l'oeil modifié à point d'intersection translaté entre front montant et descendant, qui vient compenser la caractéristique non-linéaire du modulateur à électro-absorption 4 (FIG.1). Comme montré à la figure 4C, en sortie du modulateur à électro-absorption 4, est obtenu un diagramme de l'oeil de l'enveloppe du signal optique modulé sensiblement symétrique qui offre, pour un taux d'erreur donné en réception, une distance maximale pouvant être parcourue par le signal optique modulé.

En pratique, la tension de référence Vref' doit être réglée de sorte à obtenir un diagramme de l'oeil de l'enveloppe du signal optique modulé sensiblement symétrique. Cette tension Vref' est naturellement comprise entre les niveaux respectifs associés aux états "0" et "1" en étant différente de ces états.

Comme montré dans la figure 3, selon une autre variante de l'invention, le circuit de mise en forme 1 peut être sous la forme d'une unique porte OU 12 dont une tension de polarisation est ajusté à Vref'. La porte OU reçoit sur une première entrée le signal électrique binaire entrant S et sur une seconde entrée l'état "0". Elle bascule:
- de l'état "0" vers l'état "1" si S ≥ Vref';
- de l'état "1" vers l'état "0" si S ≤ Vref'.

Selon encore une autre variante, le circuit de mise en forme peut être sous la forme d'un comparateur recevant le signal électrique binaire entrant sur une entrée non-inverseuse et recevant la tension de référence sur une entrée inverseuse.

En pratique, l'invention s'avère particulièrement avantageuse pour des fréquences élevés du signal électrique binaire entrant S, par exemple égales à 2,5 GHz. Elle reste néanmoins applicable à toute fréquence.

L'invention pourrait être étendue à la modulation par un signal électrique binaire à N états. Il est alors nécessaire de prévoir des moyens de mise en forme dont une sortie bascule de l'un des N états vers un autre de ces N états en réponse à un niveau du signal électrique supérieur à un seuil prédéterminé, et bascule de cet autre état vers ledit un des états en réponse à un niveau du signal électrique inférieur au seuil prédéterminé. Un seuil respectif est alors associé à chaque couple d'états entre lesquels une transition est possible dans le signal à N états. Ce seuil possède un niveau qui est compris entre et différent des niveaux respectifs pris par les deux états considérés.

## Revendications

1. Dispositif pour moduler en amplitude un signal optique (L) par un signal électrique (S) à N états, N étant supérieur ou égal à 2, comprenant :
- un modulateur (4) pour recevoir ledit signal optique à moduler (L) sur une première entrée, et un signal électrique modulant (M) sur une seconde entrée,
ledit dispositif étant **caractérisé en ce qu'**il comprend, en amont de la seconde entrée, des moyens de mise en forme (1) dont une entrée reçoit ledit signal électrique (S) à N états, et dont une sortie bascule de l'un desdits N états vers un autre de ces N états en réponse à un niveau dudit signal électrique à N états supérieur à un seuil prédéterminé (Vref'), et bascule dudit autre état vers ledit un des N états en réponse à un niveau dudit signal électrique à N états inférieur audit seuil prédéterminé, ledit seuil prédéterminé étant associé au couple desdits un et autre états et ayant un niveau compris entre et différent des niveaux respectifs pris par ces deux états.

2. Dispositif conforme à la revendication 1, **caractérisé en ce que** ledit signal électrique (S) à N états est un signal électrique binaire à 2 états, dits premier et second états, et **en ce que** la sortie desdits moyens de mise en forme (1) bascule du premier état ("0") vers le second état ("1") en réponse à un niveau dudit signal électrique binaire (S) supérieur à un seuil prédéterminé (Vref'), et bascule dudit second état ("1") vers ledit premier état ("0") en réponse à un niveau dudit signal électrique binaire inférieur audit seuil prédéterminé (Vref').

3. Dispositif conforme à la revendication 2, **caractérisé en ce que** lesdits moyens de mise en forme sont sous la forme d'une porte OU (12) à deux entrées dont l'une desdites deux entrées reçoit ledit signal électrique binaire (S) et dont l'autre desdites deux entrées est mise audit premier état ("0"), ledit seuil prédéterminé correspondant à une tension de référence de ladite porte OU.

4. Dispositif selon la revendication 2 **caractérisé en ce que** lesdits moyens de mise en forme sont sous la forme d'un comparateur recevant ledit signal électrique binaire sur une entrée non-inverseuse et recevant la tension de référence sur une entrée inverseuse.

5. Dispositif selon l'une quelconque des revendications précédentes **caractérisé en ce que** ledit signal optique est produite par une source laser (5).

6. Dispositif selon l'une quelconque des revendications précédentes, **caractérisé en ce que** la sortie desdits moyens de mise en forme est appliquée à ladite seconde entrée du modulateur à travers un amplificateur (2).

7. Dispositif selon l'une quelconque des revendications précédentes, **caractérisé en ce que** la sortie desdits moyens de mise en forme est appliquée à ladite seconde entrée du modulateur à travers un té de polarisation (3).

8. Dispositif selon l'une quelconque des revendications précédentes, **caractérisé en ce que** le modulateur (4) est un modulateur à électro-absorption.

## Patentansprüche

1. Vorrichtung zum Amplitudenmodulieren eines optischen Signals (L) mit einem N Zustände aufweisen elektrischen Signal (S), wobei N größer oder gleich 2 ist, mit:
einem Modulator (4) zum Empfangen des zu modulierenden optischen Signals (L) auf einem ersten Eingang und einem modulierenden elektrischen Signal (M) auf einem zweiten Eingang,
wobei die Vorrichtung **dadurch gekennzeichnet ist, dass** sie vor dem zweiten Eingang eine Formungseinrichtung (1) aufweist, von der ein Eingang das elektrische N-Zustands-Signal (S) empfängt und von der ein Ausgang von einem der N Zustände in einen anderen dieser N Zustände in Reaktion auf ein Niveau des elektrischen.N-Zustands-Signals oberhalb einer vorgegebenen Schwelle (Vref') übergeht und von diesem anderen Zustand zu dem einen der N Zustände in Reaktion auf ein Niveau des elektrischen N-Zustands-Signals unterhalb dieser vorgegebenen Schwelle übergeht, wobei die vorgegebene Schwelle dem Paar aus diesem einen und diesem anderen Zustand zugeordnet ist und ein Niveau hat, das zwischen den jeweiligen von diesen zwei Zuständen eingenommenen Niveaus liegt.

2. Vorrichtung nach Anspruch 1, **dadurch gekennzeichnet, dass** das elektrische N-Zustands-Signal (S) ein binäres elektrisches Signal mit zwei Zuständen, als erster bzw. zweiter Zustand bezeichnet, ist, und dass der Ausgang der Formungseinrichtung (1) vom ersten Zustand ("0") in den zweiten Zustand ("1") in Reaktion auf ein Niveau des binären elektrischen Signals (S) oberhalb einer vorgegebenen Schwelle (Vref') übergeht und von dem zweiten Zustand ("1") in den ersten Zustand ("0") in Reaktion auf ein Ninveau des binären elektrischen Signals unterhalb der vorgegebenen Schwelle (Vref') übergeht.

3. Vorrichtung nach Anspruch 2, **dadurch gekennzeichnet, dass** die Formungseinrichtung in Form eines Oder-Gatters (12) mit zwei Eingängen vorliegt, wobei der eine der zwei Eingänge das binäre elektrische Signal (S) empfängt und der andere der zwei Eingänge auf den ersten Zustand ("0") gelegt ist, wobei die vorgegebene Schwelle einer Referenzspannung des Oder-Gatters entspricht.

4. Vorrichtung nach Anspruch 2, **dadurch gekennzeichnet, dass** die Formungseinrichtung in Form eines Komparators vorliegt, der das binäre elektrische Signal an einem nicht invertierenden Eingang empfängt und die Referenzspannung an einem invertierenden Eingang empfängt.

5. Vorrichtung nach einem beliebigen der vorhergehenden Ansprüche, **dadurch gekennzeichnet, dass** das optischen Signal von einer Laserquelle (5) erzeugt ist.

6. Vorrichtung nach einem beliebigen der vorhergehenden Ansprüche, **dadurch gekennzeichnet, dass** der Ausgang der Formungseinrichtung auf den zweiten Eingang des Modulators über einen Verstärker (2) gelegt ist.

7. Vorrichtung nach einem beliebigen der vorhergehenden Ansprüche, **dadurch gekennzeichnet, dass** der Ausgang der Formungseinrichtung auf den zweiten Eingang des Modulators über ein Polarisations-T-Stück gelegt ist.

8. Vorrichtung nach einem beliebigen der vorhergehenden Ansprüche, **dadurch gekennzeichnet, dass** der Modulator (4= ein Elektroabsorptionsmodulator ist.

## Claims

1. A circuit for amplitude modulating an optical signal (L) by an N-state electrical signal (S), N being greater than or equal to 2, the circuit comprising:
· a modulator (4) having a first input for receiving said optical signal to be modulated (L) and a second input for receiving a modulating electrical signal (10);
said circuit being **characterized in that** it comprises, upstream from the second input, shaping means (1) having an input receiving said N-state electrical signal (S) and having an output that switches from one of said N states to another of said N states in response to said N-state electrical signal taking up a level that is greater than a predetermined threshold (V'_{ref}), and switching from said other state to said one of the N states in response to said N-state electrical signal taking up a level that is less than said predetermined threshold, said predetermined threshold being associated with said pair of states (said one state and said other state), and having a level that lies between and is different from the respective levels taken by said two states.

2. A circuit according to claim 1, **characterized in that** said N-state electrical signal (S) is a binary electrical signal having two states, referred to as a first state and as a second state, and **in that** the output of said shaping means (1) switches from the first state ("0") to the second state ("1") in response to said binary electrical signal (S) taking up a level that is greater than a predetermined threshold (V'_{ref}), and switches from said second state ("1") to said first state ("0") in response to said binary electrical signal taking up a level that is less than said predetermined threshold (V'_{ref}).

3. A circuit according to claim 2, **characterized in that** said shaping means are in the form of a two-input OR gate (12) having one of its two inputs receiving said binary electrical signal (S) and having the other of its two inputs connected to said first state ("0"), said predetermined threshold corresponding to a reference voltage for said OR gate.

4. A circuit according to claim 2, **characterized in that** said shaping means are in the form of a comparator receiving said binary electrical signal on a noninverting input and receiving the reference signal on an inverting input.

5. A circuit according to any preceding claim, **characterized in that** said optical signal is produced by a laser source (5).

6. A circuit according to any preceding claim, **characterized in that** the output from said shaping means is applied to said second input of the modulator via an amplifier (2).

7. A circuit according to any preceding claim, **characterized in that** the output from said shaping means is applied to said second input of the modulator via a bias T (3).

8. A circuit according to any preceding claim, **characterized in that** the modulator (4) is an electroabsorption modulator.
